# EUROPÄISCHE PATENTANMELDUNG

(11) **EP 0 949 223 A2**
(43) Veröffentlichungstag der Anmeldung: **13.10.1999**
(21) Anmeldenummer: 99890112.8
(22) Anmeldetag: 31.03.1999
(51) Int. Cl.: C05F 9/04, C05F 17/02

(54) **Rotteanlage**

(30) Priorität: 07.04.1998 AT 60698
(71) Anmelder: M-U-T MASCHINEN-UMWELTTECHNIK- TRANSPORTANLAGEN GESELLSCHAFT M.B.H., A-2000 Stockerau (AT)
(72) Erfinder: Harrer, Ewald, Dr.-Ing., 2000 Stockerau (AT)
(74) Vertreter: Müllner, Erwin, Dr.

(57) **Zusammenfassung**

Eine Rotteanlage mit Rottebehältern (1, 1', 1") umfasst zur individuellen Prozessrohluftkonditionierung vorzugsweise vier Zuleitungen (2, 3, 4, 5) mit Luft unterschiedlicher Zustände und ein Mischventil bzw. eine Gruppe von Mischventilen (6) je Rottebehälter (1, 1', 1"). Eine Zuleitung (2) speist Außenluft über ein Gebläse (10) ein. Eine zweite Zuleitung (3) führt die Außenluft über Wärmetauscher (11, 12) den Ventilen (6) zu. Eine dritte Zuleitung (4) entnimmt Prozessabluft und führt diese über Wärmetauscher (14) und ein Gebläse (15) an die Gruppe von Ventilen (6). Eine vierte Zuleitung (5) ist direkt mit der Leitung (9) für Prozessabluft verbunden und leitet dieses ohne weitere Aufarbeitung an die Ventilgruppen (6) weiter. Eine Mess-Stelle in der Leitung (8) für Prozessabluft ist jeweils einem Rottebehälter (1, 1', 1") individuell zugeordnet. Ein Rechner (7) erhält die Daten und ermittelt aus dem Istzustand der individuellen Prozessabluft im Vergleich mit dem Sollzustand die optimalen Parameter der Prozessrohluft. Der Rechner (7) steuert die Ventile (6) jeweils individuell und stellt den optimalen Zustand der Prozessrohluft durch Mischen her.

## Beschreibung

Die Erfindung betrifft eine Rotteanlage, beispielsweise Kompostierungsanlage, mit offenen oder geschlossenen RotteLagerpositionen, wie etwa Rottebehältern und mit einer Zuführung von Prozessrohluft für den Rotteprozess sowie einer Ableitung von Prozessabluft.

Es ist bekannt, Rottegut zu Kompost zu verarbeiten bzw. zu trocknen oder trocken zu stabilisieren und zu deponieren. In allen Fällen ist es erforderlich, das Verrottungsverfahren in einem Rottebehälter oder in Rottelagerpositionen zu optimieren um den Verfahrensverlauf rasch zum Ziel zu führen. Dies wird durch Zufuhr von Prozessrohluft erreicht, wenn sie hinsichtlich ihrer Temperatur, Feuchte, des Wasserdampfpartialdruckes und der Luftmenge einstellbar ist. In diesem Sinne ist es bekannt, die aus dem in einem geschlossenen Rottebehälter austretende warme und feuchte Prozessabluft dem Rottegut gegebenenfalls unter Beimischung von Frischluft erneut zuzuführen (EP 0 458 136 B1).

Die Erfindung zielt darauf ab, die Prozessrohluft bei einer Rotteanlage entweder zur Kompostierung oder zur Trocknung in weiten Bereichen hinsichtlich der Menge, Feuchte und Temperatur einstellbar zur Verfügung zu stellen und eine Auswahl zur Prozessoptimierung zu treffen. Dies wird dadurch erreicht, dass zur Prozessrohluftkonditionierung ein Mischventil bzw. eine Gruppe von Mischventilen vorgesehen ist, an deren Eingang vorzugsweise vier Zuleitungen mit Luft unterschiedlicher Luftzustände anliegen, dass eine Zuleitung mit einem Frischluftgebläse in Verbindung steht und Außenluft dem Mischventil zuführt, dass eine weitere Zuleitung, vom Frischluftgebläse ausgehend, über einen oder mehrere Wärmetauscher, die von Prozessabluft beaufschlagt sind, dem Mischventil erwärmte trockene Frischluft zuführen, dass eine Abzweigleitung mit Prozessabluft vorzugsweise über mindestens einen von der Prozessabluft beaufschlagten Wärmetauscher und ein Gebläse an das Mischventil angeschlossen ist und dass eine weitere Abzweigleitung mit Prozessabluft unmittelbar über ein Gebläse mit dem Mischventil in Verbindung steht. Auf diese Weise stehen
- Außenluft je nach Jahreszeit mit z.B. 20°C und 40% Luftfeuchte
- und trockene vorgewärmte Frischluft von z.B. 35°C
- und aufgewärmte Abluft von z.B. 35°C und einer Feuchte von 70%
- sowie die Prozessabluft direkt mit einer Temperatur von z.B. 42°C bei Wasserdampfsättigung (100% Luftfeuchte)

zur Verfügung. Aus diesem Angebot kann praktisch jeder gewünschte Prozessrohluftzustand durch Mischen mit Hilfe des oder der Ventile erreicht werden.

Wenn dem Frischluftgebläse ein Befeuchter zur Kühlung der Luft nachgeschaltet ist, dann ist dadurch eine Abkühlung der Frischluft möglich. Wird die über Wärmetauscher geführte Frischluft nicht oder nicht zur Gänze für das Prozessrohluftgemisch benötigt, dann kann der Überschuss zu Heizzwecken etwa für die Halle der Anlage verwendet werden. Es ist zweckmäßig, wenn das Mischventil oder die Gruppe von Mischventilen an einen Rechner angeschlossen ist, der mit Messgeräten im Abluftbereich eines jeden Rottebehälters in Verbindung steht und die Prozessrohluftmenge, Temperatur und Feuchte für eine optimale Gestaltung des Wärmehaushaltes des gewünschten Rotteprozesses im Rottebehälter am Mischventil oder an der Gruppe von Mischventilen regelt. Dadurch kann eine Anlage mit einer Vielzahl von Rottebehältern, die alle über einen gemeinsamen Abluftschacht entlüftet werden, dennoch individuell geregelt werden, weil für jede einzelne Rotteposition exakt nach dem Messergebnis, z.B. aus ihrem Abluftbereich, die Zusammensetzung der Prozessrohluft durch Steuerung der Mischventile oder Klappen an den beispielsweise vier Zuführungen bestimmt wird. Wenn dem Mischventil oder der Gruppe von Mischventilen ein Umschaltventil für den Wechsel von drückender auf saugende Belüftung nachgeschaltet ist, dann kann die Durchströmungsrichtung der Prozessrohluft durch die Rotte im geschlossenen Rottebehälter umgekehrt werden.

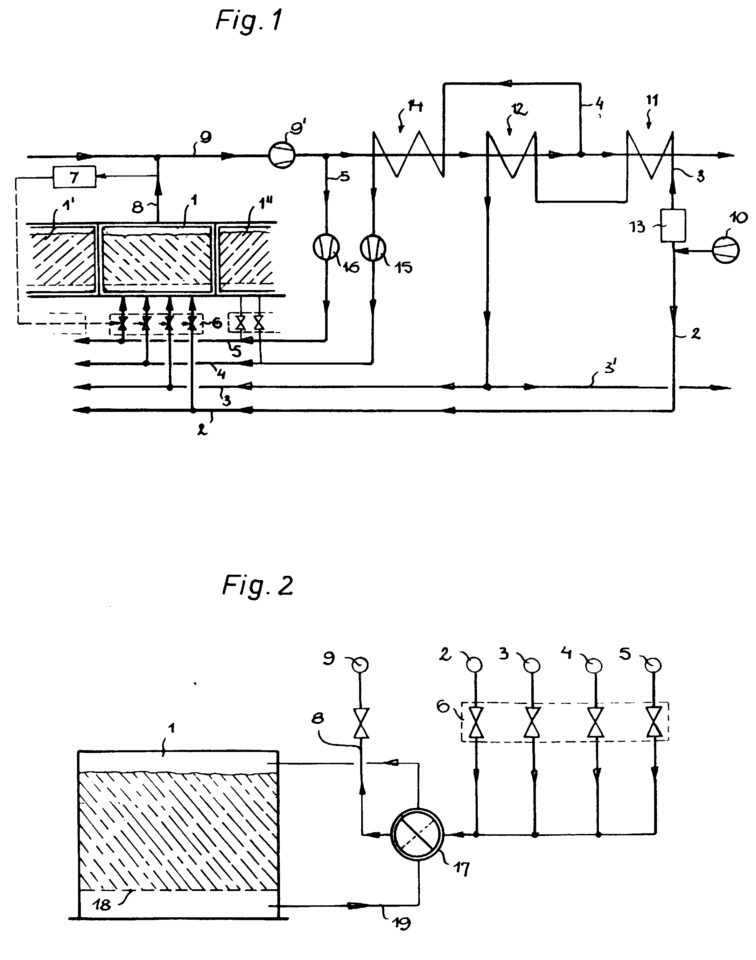

Eine erfindungsgemäße Rotteanlage wird nachfolgend anhand von Prinzipdarstellungen beschrieben. Fig. 1 zeigt Rottebehälter einschließlich einer Anordnung zur Prozessrohluftkonditionierung als Schaltbild und Fig. 2 eine Variation für ein Detail aus Fig. 1.

Eine Rotteanlage ist hier als Kompostierungsanlage mit geschlossenen Rottebehältern 1, 1', 1" dargestellt. Für die Steuerung des Ablaufs eines Verrottungsvorganges müssen Temperatur, Feuchte, Wasserdampfpartialdruck und Luftmenge einstellbar und an den Zustand der Rotte je nach Fortschritt des Verrottungsprozesses anpassbar sein. Dazu wird die Prozessrohluft entsprechend konditioniert. Sie wird individuell für jeden Rottebehälter 1, 1', 1" aus vier Zuleitungen 2, 3, 4, 5 mit unterschiedlichen Luftzuständen zusammengemischt. Ein Satz von Mischventilen 6 ermöglicht diese Regelung. Sie erfolgt mittels eines Rechners 7, der den Zustand der Prozessabluft in einer Prozessabluftleitung 8 unmittelbar am Ausgang des Rottebehälters 1 misst und der danach die Prozessrohluft durch Öffnen und Schließen der einzelnen Mischventile 6 bedarfsgerecht einstellt.

Anstelle von Mischventilen 6 können Dosierventile oder Dosierarmaturen bzw. Regelklappen als Regelorgane zwecks regelbarer Einspeisung in die Mischstrecke vorgesehen sein. Ferner kann ein Belüftungsventil in die Luftführung eingebaut werden, welches ein Umschalten von kontinuierlicher auf intermittierende Belüftung ermöglicht.

Die Prozessabluftleitung 8 des Behälters 1 bzw. jene der Rottebehälter 1', 1" usw. münden in eine gemeinsame Prozessabluftleitung 9 mit Gebläse 9', wobei die Prozessabwärme sowie die Prozessabluft direkt bzw. indirekt für die Konditionierung der Prozessrohluft herangezogen werden. Die Prozessabluft ist wasserdampfgesättigt und hat beispielsweise eine Temperatur von 40°C. Im Ausführungsbeispiel werden vier unterschiedliche Luftzustände zur Verfügung gestellt. Ein Frischluftgebläse 10 saugt Außenluft aus der Umgebung an und führt diese über die Leitung 2 den jeweiligen Mischventilen 6 bzw. Mischventilgruppen der einzelnen Rottebehälter 1, 1', 1" zu. Die Außenluft hat beispielsweise eine Temperatur von 20°C und eine Luftfeuchtigkeit von 40%.

Vom Frischluftgebläse 10 führt eine weitere Leitung 3 über Wärmetauscher 11, 12 zu den Mischventilgruppen 6 der einzelnen Rottebehälter 1, 1', 1" usw. Diese vorgewärmte Frischluft hat beispielsweise eine Temperatur von 35°C und ist infolge der Anwärmung relativ trocken. In der Leitung 3 kann noch ein Wäscher oder Befeuchter 13 (z.B. ein Kühlturm) eingeschaltet werden, wobei die Temperatur reduziert wird.

Von der Prozessabluftleitung 9 zweigt ferner die Leitung 4 ab, die über einen Wärmetauscher 14 und ein Gebläse 15 geführt ist. Der Wärmetauscher 14 ist primärseitig so wie die Wärmetauscher 11 und 12 von der Prozessabluft (Leitung 9) durchströmt. Es steht dadurch in der Leitung 4 an den Mischventilgruppen 6 Luft von z.B. 35° mit einer Feuchte von etwa 70% zur Verfügung.

Schließlich ist die Leitung 5 unmittelbar an der Prozessabluftleitung 9 angeschlossen und führt über ein Gebläse 16 zu den Mischventilen 6. Diese haben eingangsseitig von trockener kühler bis wasserdampfgesättigter heisser Luft eine Palette von Varianten zur Verfügung, sodass eine Mischung bedarfsgerecht möglich ist. Dazu kann in besonders zweckmäßiger Weise der Zustand der individuellen Prozessabluft je Rottebehälter 1, 1', 1" herangezogen werden. Abweichungen von einem Sollzustand werden im Rechner 7 erfasst und durch entsprechende Konditionierung der Prozessrohluft individuell kompensiert. Dazu werden die Mischventile 6 des entsprechenden Rottebehälters 1, 1', 1" elektromagnetisch oder pneumatisch geöffnet, teilweise geöffnet oder geschlossen. Der Rechner 7 verfügt ferner über die Information vom Zustand der Luft in den Leitungen 2 bis 5. Durch Veränderung der zugeführten Wärme, z.B. über die Wärmetauscher 11, 12 und 14 lassen sich Luftfeuchte und Temperatur in den vorgenannten Leitungen 2 bis 5 verändern. Ebenso kann eine Veränderung auch durch den Wäscher bzw. Befeuchter 13 erreicht werden. Um hier brauchbare Parameter als Basis für eine Luftmischung zu erhalten, kann der Rechner 7 die vorgenannten Komponenten (z.B. 11, 12, 13, 14) zuschalten oder abschalten.

Bemerkenswert erscheint noch die Abzweigung 3' in der Leitung 3, die überschüssige Wärme in Form warmer trockener Luft zu Heizzwecken zur Verfügung stellt.

Der besondere Vorteil der erfindungsgemäßen Anordnung liegt in der stufenlos aus vier kostengünstig zur Verfügung stehenden Luftzuständen mischbaren Prozessrohluft, die damit exakt und selbsttätig auf die individuellen Bedürfnisse einer Rotte je Rottebehälter und den jeweils optimalen Prozessablauf abgestimmt werden kann.

Fig. 2 zeigt die Leitungen 2, 3, 4, 5 nach Fig. 1 und jeweils einem Mischventil, zusammengefasst in der Mischventilgruppe 6 für den Rottebehälter 1. Ein nachgeschaltetes Umschaltventil 17 leitet die konditionierte Prozessrohluft von oben in den Rottebehälter 1 ein; sie durchdringt das Rottegut von oben nach unten und verlässt den Behälter 1 unterhalb eines Rostes 18 über eine Leitung 19, über das Umschaltventil 17 und die Leitung 8 in Richtung auf die Prozessabluftleitung 9.

Wenn das Ventil 17 umgeschaltet wird, dann wird das Rottegut von unten nach oben von Prozessrohluft durchsetzt. Es ist im Interesse eines gleichmäßigen Ergebnisses vorteilhaft, die Strömungsrichtung im Rottegut von Zeit zu Zeit zu wechseln (saugender Betrieb/drückender Betrieb).

Anstelle der hier dargestellten vier Leitungen 2 bis 5 mit jeweils unterschiedlichen Luftzuständen, die allein aus der Umwelt in Verbindung mit den Möglichkeiten der Prozessabluft geschaffen wurden, können auch mehr oder weniger Leitungen und Luftzustände vorgesehen werden, um daraus die gerade erforderliche Prozessrohluft zu mischen.

## Patentansprüche

1. Rotteanlage, beispielsweise Kompostierungsanlage, mit offenen oder geschlossenen Rotte-Lagerpositionen, wie etwa Rottebehältern und mit einer Zuführung von Prozessrohluft für den Rotteprozess sowie einer Ableitung von Prozessabluft, **dadurch gekennzeichnet**, dass zur Prozessrohluftkonditionierung ein Mischventil bzw. eine Gruppe von Mischventilen (6) vorgesehen ist, an deren Eingang vorzugsweise vier Zuleitungen (2, 3, 4, 5) mit Luft unterschiedlicher Luftzustände anliegen,
- dass eine Zuleitung (2) mit einem Frischluftgebläse (10) in Verbindung steht und Außenluft dem Mischventil (6) zuführt,
- dass eine weitere Zuleitung (3), vom Frischluftgebläse (10) ausgehend, über einen oder mehrere Wärmetauscher (11, 12), die von Prozessabluft beaufschlagt sind, dem Mischventil (6) erwärmte trockene Frischluft zuführen,
- dass eine Abzweigleitung (4) mit Prozessabluft über mindestens einen von der Prozessabluft beaufschlagten Wärmetauscher (14) und ein Gebläse (16) an das Mischventil (6) angeschlossen ist
- und dass eine weitere Abzweigleitung mit Prozessabluft unmittelbar über ein Gebläse (15) mit dem Mischventil (6) in Verbindung steht.

2. Rotteanlage nach Anspruch 1, **dadurch gekennzeichnet**, dass dem Frischluftgebläse (10) ein Befeuchter (13) zur Kühlung der Luft nachgeschaltet ist.

3. Rotteanlage nach Anspruch 1, **dadurch gekennzeichnet**, dass die über den oder die Wärmetauscher (11, 12) geführte Frischluft mindestens als Teilstrom an eine Warmluftheizung zu deren Speisung angeschlossen ist.

4. Rotteanlage nach einem der Ansprüche 1 bis 3, **dadurch gekennzeichnet**, dass das Mischventil oder die Gruppe von Mischventilen (6) an einen Rechner (7) angeschlossen ist, der mit Messgeräten im Abluftbereich eines jeden Rottebehälters (1, 1', 1") in Verbindung steht und die Prozessrohluftmenge, Temperatur und Feuchte für eine optimale Gestaltung des Wärmehaushaltes für den gewünschten Rotteprozess im Rottebehälter (1, 1', 1") am Mischventil oder an der Gruppe von Mischventilen (6) regelt.

5. Rotteanlage nach einem der Ansprüche 1 bis 4, **dadurch gekennzeichnet**, dass dem Mischventil oder der Gruppe von Mischventilen (6) ein Umschaltventil (17) zum Wechseln von saugender auf drückende Belüftung des Rottebehälters (1, 1', 1") nachgeschaltet ist.

6. Rotteanlage nach einem der Ansprüche 1 bis 5, **dadurch gekennzeichnet**, dass ein Belüftungsventil zur Umschaltung von kontinuierlicher auf intermittierende Belüftung vorgesehen ist.
